# DEMANDE DE BREVET EUROPEEN

(11) **EP 1 921 835 A1**
(43) Date de publication de la demande: **14.05.2008**
(21) Numéro de dépôt: 07116076.6
(22) Date de dépôt: 11.09.2007
(51) Int. Cl.: H04M 1/72, H04Q 7/32

(54) **Enrichissement de la signalisation dans une session de communication de type "Push to Talk" par insertion d'une carte de visite**

(30) Priorité: 18.10.2006 FR 0654332
(71) Demandeur: Alcatel Lucent, 75008 Paris (FR)
(72) Inventeur: Legrand, Patrick, 91360 Epinay-sur-Orge (FR); Daigremont, Johann, 92220 Bagneux (FR)
(74) Mandataire: Chaffraix, Sylvain

(57) **Abrégé**

Protocole de signalisation de type SIP pour réseau de communication mobile (N), comportant un message de signalisation d'invitation (MI), « INVITE », destiné à établir une session de communication de type « Push to Talk » entre un client de communication appelant (A) et un ou plusieurs clients de communication appelés (B, C) et contenant l'adresse logique du client de communication appelant et une adresse du ou des clients de communication appelés.

Le protocole se caractérise en ce que le message de signalisation d'invitation (MI) contient en outre une carte de visite associée à un utilisateur du client de communication appelant (A).

## Description

La présente invention est relative aux réseaux de communication. Plus précisément, elle concerne l'invitation par un client de communication d'un ou plusieurs autres clients de communication pour établir une session de communication, notamment de type dit « PoC » (« Push to talk over Cellular » en langue anglaise).

Le service « Push to Talk » (PTT) est un service de communication de type « half duplex » qui permet à des parties de communiquer de façon interactive mais non simultanée. Une commande (bouton, touche...) de chaque client permet de commuter le client d'un mode de réception vers un mode d'émission et vice-versa.

Ce service a été adapté pour les réseaux cellulaires de communication et alors désigné par l'acronyme PoC (« Push to talk over Cellular» ; « Presser pour parler par réseau cellulaire »).

Un tel service est promu actuellement par l'OMA (Open Mobile Alliance). Il est par exemple décrit et spécifié dans les documents « Push to talk over Cellular (PoC) - Architecture (OMA-AD_PoC-V1_0-20060609-A), et « OMA PoC Control Plane » (OMA-TS-PoC-ControlPlane-V1_0-20060609-A). Ces deux documents ont été publiés le 9 juin 2006.

Selon ces spécifications normalisées, un client voulant initier une session de communication de type « PoC » transmet un message d'invitation à un serveur de communication PoC.

Ce message d'invitation est une requête SIP « Invite ». Ce type de requête est principalement spécifié dans le RFC 3261 de l'IETF (*Internet Engineering Task Force*) intitulé « Session Initiation Protocol ».

Le message d'invitation contient l'adresse logique dite URI (« *Uniform Resource Identifier* », en langue anglaise) du client émetteur de l'invitation, ainsi que du ou des clients destinataires (c'est-à-dire que l'émetteur souhaite inviter à la session de communication « PoC »).

Un des rôles du serveur de communication PoC est de transmettre l'invitation reçue du client émetteur (ou appelant) vers le ou les clients invités (ou appelés), grâce aux adresses contenues dans le message d'invitation.

Le client invité est typiquement un terminal de communication mobile, notamment cellulaire. Il dispose d'un moyen de visualisation, généralement un écran, sur lequel des informations relatives à l'invitation peuvent s'afficher. En fonction de ces informations, l'utilisateur du client de communication peut décider d'accepter ou non l'invitation.

Les spécifications de l'OMA ne précisent guère les informations véhiculées par les messages d'invitation. Le protocole SIP spécifie un ensemble d'entêtes. Ces entêtes permettent de transmettre l'adresse logique (URI) du client appelant. Le client de communication invité peut donc afficher cette adresse logique sur son écran. Dans le cas où l'utilisateur correspondant à cette adresse logique est connu de l'utilisateur appelé, il peut faire partie d'un répertoire et des informations contenues dans ce répertoire peuvent être affichées en plus ou à la place de l'adresse logique.

Une telle possibilité est par exemple décrite dans la demande de brevet US2005/0287997. Cet enseignement, extérieur aux travaux de normalisation de l'OMA, décrit une solution dans laquelle des informations relatives à l'appelant (« caller ID ») sont insérées dans les messages de signalisation et associées par le client de communication appelé avec un carnet d'adresses afin d'afficher des informations supplémentaires à l'utilisateur.

Toutefois, cet état de la technique n'est guère satisfaisant.

Dans le premier cas, une adresse logique peut ne pas être suffisante pour l'utilisateur pour décider convenablement d'accepter ou non l'invitation à une session de communication. En effet, une adresse logique n'est pas forcément très lisible (elle ne correspond pas forcément au nom de l'utilisateur du client appelant).

Pour ce qui est de la seconde situation, dans laquelle l'adresse logique est associée à des informations mémorisées localement par le client, elle n'est possible à mettre en oeuvre que dans le cas où le message d'invitation provient d'un correspondant déjà connu. Elle ne s'applique pas au cas d'un nouveau correspondant, et ne fournit dans ce cas aucune information aidant à la prise de décision de l'utilisateur appelé.

Des solutions ont également été développées pour permettre la transmission d'informations supplémentaires dans une application PoC. Il s'agit par exemple des solutions décrites dans les demandes de brevets US2006/0046755, US2006/0121927 et US 2006/0040686, qui exposent des moyens de communication d'images durant une session « PoC ».

Toutefois ces développements ne permettent pas la transmission d'informations supplémentaires permettant aux clients appelés de décider d'accepter ou non l'invitation à une session de communication.

En effet, dans la demande US 2006/0040686, par exemple, l'établissement de la session de communication demeure conforme à l'état de la technique et ce n'est qu'une fois cette session établie, et que le client appelé a accepté l'appel, qu'il peut recevoir une image en provenance d'un serveur.

Il ne peut donc pas tirer profit de cette image pour décider d'accepter ou non l'appel entrant.

Par conséquent, un besoin existe pour améliorer l'état de la technique et permettre aux clients appelés de disposer des informations nécessaires pour décider d'accepter ou non une invitation à une session de communication, de type « PoC » (« Push to talk over Cellular »).

L'invention a pour premier objet un client de communication disposant :
- d'un circuit de production sonore pour produire un signal sonore représentatif de données reçues sur un canal de communication descendant et d'un circuit d'acquisition sonore pour produire des données destinées à être transmises sur un canal de communication montant,
- une interface de signalisation, apte à transmettre sur un canal de signalisation des messages de signalisation. Certains de ces messages de signalisation sont destinés à établir une session de communication avec un ou plusieurs autres clients de communication,
- une interface homme-machine comprenant des moyens pour commander cette interface de signalisation, et des moyens pour, lorsqu'une session de communication de type « Push to Talk » est établie, basculer entre un mode d'émission dans lequel le microphone est actif et un mode de réception dans lequel le microphone n'est pas actif,
- des moyens d'affichage prévus pour afficher des informations basées sur des données contenues dans certains des messages de signalisation reçus.

Le client de communication selon l'invention est novateur en ce que :
- il dispose en outre d'une mémoire prévue pour stocker une carte de visite associée à un utilisateur du client de communication, et destinée à être transmise par un ou plusieurs messages de signalisation vers le ou les autres clients de communication, et en ce que
- les moyens d'affichages sont aptes à afficher, totalement ou partiellement, les cartes de visite contenues dans les messages de signalisation reçus.

Selon un mode de réalisation de l'invention, l'interface de signalisation peut être conforme au protocole SIP et prévue pour transmettre la carte de visite dans un message de signalisation « Invite » destiné à établir la session de communication avec un ou plusieurs autres clients de communication.

La carte de visite peut être insérée dans une partie SDP du message de signalisation « Invite ».

Selon une mise en oeuvre de l'invention, la carte de visite peut être conforme au format « vCard ».

Optionnellement, la mémoire prévue pour stocker une carte de visite peut être également prévue pour mémoriser un ensemble de cartes de visite, chacune associée à un utilisateur et un profil d'utilisateur, et le client de communication possède des moyens pour déterminer une carte de visite parmi cet ensemble préalablement à son émission dans un message de signalisation.

L'invention a pour second objet un protocole de signalisation pour réseau de communication mobile, comportant un message de signalisation d'invitation destiné à établir une session de communication de type « Push to Talk » entre un client de communication appelant et un ou plusieurs clients de communication appelés. Ce message de signalisation contient l'adresse logique du client de communication appelant et une adresse du ou des clients de communication appelés.

Selon l'invention, le protocole de signalisation est novateur en ce le message de signalisation d'invitation contient en outre une carte de visite associée à un utilisateur du client de communication appelant.

Selon un mode de réalisation de l'invention, le message de signalisation d'invitation est transmis par le client de communication appelant à un serveur de communication prévu pour le transmettre vers le ou les clients de communication appelés en fonction de la ou des adresses qu'il contient.

Selon une mise en oeuvre de l'invention, le message de signalisation peut être un message « Invite » multi-parties conforme à la normalisation SIP et dans lequel la carte de visite est contenue dans une partie conforme au protocole SDP.

Optionnellement, cette carte de visite peut être conforme au format vCard.

L'invention a également pour objet un produit logiciel contenant un code destiné à mettre en oeuvre le protocole de communication selon l'invention. Un tel code peut éventuellement être téléchargé depuis un serveur applicatif sur les clients de communication.

L'invention et ses caractéristiques apparaîtront de façon plus claire dans la description de mises en oeuvre qui va suivre.
La figure 1 schématise un réseau de communication permettant de mettre en oeuvre l'invention.
La figure 2 représente de façon schématique un message de signalisation selon l'invention.

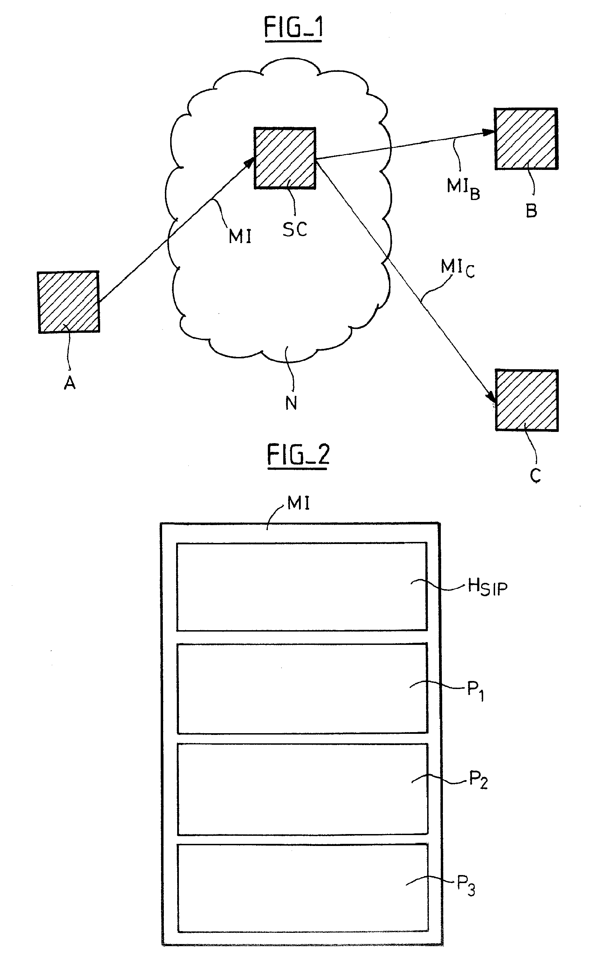

Dans l'exemple de la figure 1, un client de communication A peut communiquer avec un réseau de communication mobile N. Ce réseau de communication mobile est typiquement un réseau cellulaire de type GSM, UMTS, CDMA etc. Il peut s'agir d'un réseau convergeant, comportant un sous-réseau mobile et un sous-réseau fixe et permettant à des clients de communication tant fixes que mobiles de communiquer ensemble. Un tel réseau peut être conforme à l'architecture IMS (*Internet Multimedia Subsystem*) normalisée par le 3GPP et TISPAN.

Par l'intermédiaire de ce réseau de communication N, le client de communication N peut communiquer avec un ou plusieurs autres clients de communication B, C.

De façon connue en soi, un terminal de communication peut être connecté au réseau de communication par un canal montant, permettant de transmettre vers le réseau de communication N, des données (voix, vidéo...) provenant de l'utilisateur du client de communication ; un canal descendant permettant la réception de données provenant du réseau (et indirectement généralement d'un autre client de communication) ; et d'un canal de signalisation permettant la transmission bidirectionnelle de messages de signalisation entre le client de communication et le réseau N.

Les clients de communication sont typiquement des terminaux de communication disposants de circuits de production et d'acquisition sonores permettant l'établissement de session de communication de type « voix ». Ils peuvent ou outre disposer de moyens plus avancés comme des écrans, des caméras etc. permettant l'établissement de session de communication multimédia (vidéo etc.).

Le circuit de production sonore est typiquement un haut-parleur ou un casque permettant de produire un signal sonore représentatif de données reçus sur le canal de communication descendant.

Le circuit d'acquisition sonore est typiquement un microphone destiné à produire des données qui sont ensuite émise vers le réseau de communication via le canal de communication montant.

Les clients de communication A, B, C disposent en outre d'interfaces de signalisation pour émettre et recevoir des messages de signalisation sur le canal de signalisation les connectant au réseau de communication N.

Ces interfaces de signalisation peuvent être conformes au protocole SIP tel que défini dans le RFC 3261 de l'IETF (*Internet Engineering Task Force*) et éventuellement aux extensions de ce protocole SIP définies ultérieurement par l'IETF ou d'autres organismes de normalisation.

Afin d'établir une session de communication de type « PoC » (« *Push to talk over Cellular* »), le client de communication A émet un message de signalisation d'invitation MI vers le réseau de communication N.

Le client de communication A dispose d'une interface homme-machine qui comprend des moyens pour commander l'interface de signalisation et déclencher l'émission de ce message de signalisation d'invitation MI. Cette interface homme-machine est typiquement composée d'un ensemble de touches, éventuellement en outre d'un écran tactile, de molettes etc. qui permettent à l'utilisateur de commander et contrôler le client de communication. Par l'intermédiaire de cette interface homme-machine, il peut donc déclencher l'initiation d'une session de communication de type « PoC ».

Cette même interface homme-machine dispose également de moyens (touches, molettes...) pour, lorsqu'une session de communication « Push to Talk » est établie, basculer entre un mode de réception et un mode d'émission. Dans le mode de réception, le circuit d'acquisition sonore n'est pas actif. Dans le mode d'émission, généralement, le circuit de production sonore n'est pas actif.

Le message de signalisation d'invitation Ml peut être transmis à un serveur de communication SC au sein du réseau de communication. Ce serveur de communication est apte à comprendre le contenu du message de signalisation d'invitation MI et, en fonction de ce contenu, de le transmettre vers les clients de communication appelés B et C.

La figure 2 schématise un tel message de signalisation d'invitation conforme au protocole SIP et aux spécifications normalisés de l'OMA pour un service « PoC ».

Ce message de signalisation d'invitation MI est alors un message « INVITE » défini par le RFC 3261 de l'IETF.

Il comporte une première partie E_{SIP} formée par un ensemble d'entêtes SIP. Ces entêtes contiennent au moins l'adresse logique de l'utilisateur du client de communication A. Elles contiennent aussi des informations permettant l'acheminement du message d'invitation jusqu'au serveur de communication SC.

Le message de signalisation « INVITE » contient également une partie P1 contenant des informations décrivant la session de communication établir et permettant la négociation de ces paramètres par les différentes parties. Ces paramètres peuvent être, par exemple, relatifs à l'encodage des flux média à mettre en oeuvre etc.

De façon connue en soi, cette partie est conforme au protocole SDP (« *Session Description Protocol* »).

Le message de signalisation MI contient également une partie P2, également conforme à ce protocole SDP, ainsi qu'il est spécifié dans les documents normalisateurs sus-mentionnés et issus de l'OMA. Cette partie P2 contient les adresses logiques des clients de communications invités.

Le code suivant est un exemple illustratif de message de signalisation d'invitation conforme au protocole **SIP** et aux spécifications de l'OMA. Le premier extrait représente les entêtes E_{SIP} de ce message d'invitation. Les mots en gras représentent les mots-clés de la grammaire du protocole SIP et n'ont été mis en forme que dans un souci de lisibilité.

On peut remarquer l'entête « Content-Type: multipart/mixed » qui signifie que le message d'invitation MI est un message « multi-parties », comportant plusieurs parties conformes au protocole SDP (P1 et P2, ainsi que P3 qui sera ultérieurement décrit).

### SIP INVITE request

**Request-URI** sip:PoCConferenceFactoryURI.networkA.net
**P-Preferred-Identity:** "PoC User A" <sip:PoC-
UserA@networkA.net>
**Accept-Contact:** * ; +g.poc.talkburst ; require;explicit
**User-Agent:** PoC-client/OMA1.0 Acme-Talk5000/v1.01
**Privacy:** id
**Contact:** <sip: PoC-
ClientA.networkA.net>;+g.poc.talkburst
**Supported:** timer
**Session-Expires:** 1800;refresher=uac
**Allow:** INVITE,ACK,CANCEL,BYE,REFER,MESSAGE,SUBSCRIBE, NOTIFY,PUBLISH
**Content-Type:** multipart/mixed
**P-Alerting-Mode:** MAO

La partie P1, conforme au protocole SDP, peut se présenter sous la forme suivante :
**Content-Type:** application/sdp
**c=** IN IP6 5555::aaa:bbb:ccc:ddd
m= audio 3456 RTP/AVP 97
**a=** rtpmap:97 AMR
**a=** rtcp:5560
**m=** application 2000 udp TBCP
**a=** fmtp:TBCP queuing=1 ; tb_priority=2 ; timestamp=1

La partie P2, elle aussi conforme au protocole SDP, peut se présenter sous la forme suivante :
**Content-Type:** application/resource-lists+xml
**Content-Disposition:** recipient-list
<?xml version="1.0" encoding="UTF-8"?>
<resource-lists
xmlns="urn:ietf:params:xml:ns:resource-lists"
xmlns:xsi="http://www.w3.org/2001/XMLSchema-instance">
<list>
<entry uri="sip:PoC-UserB@networkB.com" />
<entry uri="sip:PoC-UserC@networkC.com" />
</list>
</resource-lists>

Comme décrit précédemment, cette partie P2 contient les adresses des clients de communication B, C appelés (« sip:PoC-UserB@networkB.com » et «sip:PoC-UserC@networkC.com »).

Le serveur de communication SC est prévu pour transmettre ce message de signalisation d'invitation MI vers les clients de communication B et C en fonction des adresses (« sip:PoC-UserB@networkB.com » et «sip:PoC-UserC@networkC.com ») contenues dans ce message. Dans l'exemple de la figure 1, le message MI est donc dupliqué en un message MI_{B} transmis au client de communication **B** et un message MI_{C} transmis au client de communication C.

En outre, selon l'invention une partie P3 est également insérée dans le message de signalisation d'invitation MI émis par le client de communication A appelant.

Cette partie P3 contient une carte de visite de l'utilisateur. Elle peut être stockée préalablement dans une mémoire prévue à cet effet au sein du client de communication. Le client de communication peut alors être prévu pour automatiquement insérer cette carte de visite stockée dans les messages de signalisation d'invitation émis. Éventuellement, une confirmation de l'utilisateur peut être demandée, ou bien l'insertion automatique peut être l'objet d'une option de configuration de ce client de communication.

Si un même client de communication est susceptible d'être utilisé par plusieurs utilisateurs différents, la mémoire peut stocker plusieurs cartes de visite. Dans un tel cas, la détermination de la carte de visite à transmettre peut être effectuée de façon automatique lors de la connexion de l'utilisateur au client de communication (« *login* »).

Éventuellement, pour un même utilisateur, plusieurs cartes de visite peuvent être prévues et stockées, correspondant à différents profils : par exemple, une carte de visite professionnelle, une carte de visite privée etc.

Dans tous les cas, le client de communication dispose de moyens pour déterminer une carte de visite parmi l'ensemble des cartes de visite stockées, préalablement à l'émission dans un message de signalisation Ml.

Cette carte de visite peut être conforme au format vCard. Ce format vCard a le mérite d'être largement utilisé dans les courriers électroniques et permet ainsi une interopérabilité entre les messages d'invitation et les courriers électroniques ainsi qu'entre les applications et services les utilisant.

Ce format vCard (« Versitcard ») est normalisé dans sa version 3.0 par les RFC 2425 et 2426 de l'IETF, intitulés respectivement « *A MIME Content-Type for Directory Information»* et « *vCard MIME Directory Profile* ».

D'autres spécifications de cartes de visite sont bien entendu possibles, tout en demeurant dans le cadre de l'invention.

La carte de visite peut contenir différentes informations relatives à l'utilisateur du client de communication : son nom d'usage ou patronymique, son adresse électronique, son adresse physique, des numéros de téléphones, son titre et/ou sa fonction professionnelle etc.

Conformément au protocole SDP, cette partie P3 qui contient la carte de visite peut être comme suit :
**Content-Type:** application/x-vcard
**begin:** vcard
**fn:**Smith
**n::**Smith;Bob
**org**:Alcatel;
**adr**:;;Route de Nozay;Marcoussis;;F-91461
Cedex;France
**email;** internet : Bob.Smith@alcatel.fr
**tel**;work:+33 (0)1 69 63 xx xx
**tel**;fax:+33 (0)1 69 63 xx xx
**version:**2.1
**end**: vcard

Cette partie P3 contenue dans le message de signalisation MI est maintenue dans les messages de signalisation Ml_{B} et MI_{C} transmis par le serveur de communication SC respectivement aux clients de communication B et C.

Les serveurs de communication B et C disposent de moyens d'affichage, notamment d'un écran. Les informations contenues dans la carte de visite peuvent alors être affichées, partiellement ou totalement, sur cet écran. Elles offrent ainsi à l'utilisateur des clients de communication appelés des informations supplémentaires permettant de décider l'acceptation ou non de l'invitation.

Certaines informations peuvent être affichées automatiquement (noms de l'appelant...), tandis que d'autres ne seront affichés qu'après une action spécifique de l'utilisateur (adresses...). Cette séparation peut être dépendante de la taille de l'écran d'affichage.

Même s'il ne connaît pas l'utilisateur du client de communication A, l'utilisateur du client de communication B ou C peut ainsi être informé de son nom, de sa société, de son adresse etc. et ces informations peuvent l'informer suffisamment pour sa prise de décision. Il peut ainsi filtrer certains appels entrant, et éventuellement écarter les invitations non sollicitées de type « *spamming* ».

Il peut aussi se préparer mentalement et physiquement à un appel entrait (en sortant un dossier, une documentation etc.)

Cette carte de visite reçue par un client de communication peut optionnellement être stockée dans une mémoire prévue à cet effet, et être gérée par une application de type « carnet d'adresses ». Cette mémorisation et cette application permettent à un utilisateur de gérer ces contacts et de garder trace des interlocuteurs.

Selon une mise en oeuvre de l'invention, les cartes de visite peuvent également être transmises par d'autres messages de signalisation que les messages de signalisation d'invitation.

Par exemple, des messages de signalisation peuvent être transmis par un client de communication appelé B vers le client de communication appelant A et/ou vers l'autre client de communication appelé C. Ces messages de signalisation, contenant la carte de visite de l'utilisateur du client de communication B, permettent aux clients de communication A et C de connaître ces informations personnelles et d'éventuellement stocker cette carte de visite parmi leurs contacts.

## Revendications

1. Client de communication (A) disposant :
- d'un circuit de production sonore pour produire un signal sonore représentatif de données reçues sur un canal de communication descendant et d'un circuit d'acquisition sonore pour produire des données destinées à être transmises sur un canal de communication montant, et
- une interface de signalisation, apte à transmettre sur un canal de signalisation des messages de signalisation (MI) ; certains desdits messages de signalisation étant des messages d'invitation, destinés à établir une session de communication avec un ou plusieurs autres clients de communication (B, C),
- une interface homme-machine comprenant des moyens pour commander ladite interface de signalisation, et des moyens pour, lorsqu'une session de communication de type « Push to Talk » est établie, basculer entre un mode d'émission dans lequel ledit microphone est actif et un mode de réception dans lequel ledit microphone n'est pas actif,
- des moyens d'affichage prévus pour afficher des informations basées sur des données contenues dans certains des messages de signalisation reçus,
**caractérisé en ce qu'**il dispose en outre d'une mémoire prévue pour stocker une carte de visite associée à un utilisateur dudit client de communication, et destinée à être transmise par un ou plusieurs messages d'invitation vers le ou lesdits autres clients de communication, et **en ce que** lesdits moyens d'affichages sont aptes à afficher, totalement ou partiellement, les cartes de visite contenues dans lesdits messages de signalisation reçus.

2. Client de communication selon la revendication 1, dans lequel ladite interface de signalisation est conforme au protocole SIP et prévue pour transmettre ladite carte de visite dans un message de signalisation « Invite » destiné à établir ladite session de communication avec un ou plusieurs autres clients de communication.

3. Client de communication selon la revendication précédente, dans lequel ladite carte de visite est insérée dans une partie SDP dudit message de signalisation « Invite ».

4. Client de communication selon l'une des revendications précédentes, dans lequel ladite carte de visite est conforme au format « vCard ».

5. Client de communication selon l'une des revendications précédentes, dans lequel ladite mémoire prévue pour stocker une carte de visite est également prévue pour mémoriser un ensemble de cartes de visite, chacune associée à un utilisateur et un profil d'utilisateur, et possédant en outre des moyens pour déterminer une carte de visite parmi ledit ensemble préalablement à l'émission dans un message de signalisation (MI).

6. Protocole de signalisation pour réseau de communication mobile (N), comportant un message de signalisation d'invitation (MI) destiné à établir une session de communication de type « Push to Talk » entre un client de communication appelant (A) et un ou plusieurs clients de communication appelés (B, C) et contenant l'adresse logique dudit client de communication appelant et une adresse dudit ou desdits clients de communication appelés, **caractérisé en ce que** ledit message de signalisation d'invitation (MI) contient en outre une carte de visite associée à un utilisateur dudit client de communication appelant (A).

7. Protocole de signalisation selon la revendication précédente, dans lequel ledit message de signalisation d'invitation (MI) est transmis par ledit client de communication appelant (A) à un serveur de communication (SC) prévu pour le transmettre vers le ou lesdits clients de communication appelés (B, C) en fonction de la ou desdites adresses.

8. Protocole de signalisation selon l'une des revendications 5 ou 6, dans lequel ledit message de signalisation est un message « Invite » multi-parties conforme à la normalisation SIP et dans lequel ladite carte de visite est contenue dans une partie conforme au protocole SDP.

9. Protocole de signalisation selon l'une des revendications 5 à 7, dans lequel ladite carte de visite est conforme au format vCard.

10. Produit logiciel contenant un code destiné à mettre en oeuvre le protocole de communication selon l'une des revendications 6 à 9.

11. Protocole de signalisation pour réseau de communication mobile (N), comportant un message de signalisation d'invitation (MI) destiné à établir une session de communication entre un client de communication appelant (A) et un ou plusieurs clients de communication appelés (B, C) et contenant l'adresse logique dudit client de communication appelant et une adresse dudit ou desdits clients de communication appelés, **caractérisé en ce que** ledit message de signalisation d'invitation (MI) contient en outre une carte de visite associée à un utilisateur dudit client de communication appelant (A).

12. Protocole de signalisation selon la revendication précédente, dans lequel ladite carte de visite est conforme au format vCard.

13. Protocole de signalisation selon la revendication précédente dans lequel ledit message de signalisation d'invitation est un message « Invite » conforme à la normalisation SIP.

14. Protocole de signalisation selon la revendication précédente, dans lequel ladite carte de visite est contenue dans une partie conforme au protocole SDP, dudit message de signalisation d'invitation.

15. Réseau de communication mettant en oeuvre un client de communication conforme à l'une des revendications 1 à 5.
